# Europäisches Patentamt

# European Patent Office

# Office européen des brevets

(19)

(11) Veröffentlichungsnummer: **0 127 617**
**B1**

(12) # EUROPÄISCHE PATENTSCHRIFT

(45) Veröffentlichungstag der Patentschrift:
**15.10.86**

(51) Int. Cl.⁴: **B 65 G 17/02,** B 65 G 15/08

(21) Anmeldenummer: **83900025.4**

(22) Anmeldetag: **08.12.82**

(86) Internationale Anmeldenummer:
**PCT/EP 82/00258**

(87) Internationale Veröffentlichungsnummer:
**WO 84/02324 (21.06.84 Gazette 84/15)**

(54) **FÖRDERANLAGE.**

(43) Veröffentlichungstag der Anmeldung:
**12.12.84 Patentblatt 84/50**

(45) Bekanntmachung des Hinweises auf die Patenterteilung:
**15.10.86 Patentblatt 86/42**

(84) Benannte Vertragsstaaten:
**FR GB**

(56) Entgegenhaltungen:
**CH-A-599 890**
**DE-A-3 123 147**
**DE-C-933 920**
**FR-A-1 112 884**
**FR-A-1 147 215**
**GB-A-1 112 785**
**GB-A-1 119 576**
**US-A-3 637 091**

(73) Patentinhaber: **LACHMANN, Hans Peter,**
**Drosselweg 29, D-5000 Köln 60 (DE)**

(72) Erfinder: **LACHMANN, Hans Peter, Drosselweg 29,**
**D-5000 Köln 60 (DE)**

(74) Vertreter: **Happe, Otto, Dipl.- Ing., Isselburger**
**Strasse 12, D-5000 Köln 60 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Förderanlage mit einem endlosen Fördergurt aus Gummi oder einem ähnlichen Werkstoff, der mittels am Fördergurt in seinen Randbereichen befestigten Tragelementen an Seilen aufgehängt ist, die ihrerseits über Tragscheiben geführt sind, wobei das Seil jeweils mit dem Fördergurt bzw. mit den an dem Fördergurt befestigten Tragelementen nicht fest verbunden ist.

Eine derartige Förderanlage ist aus US-A-3 637 091 bekannt, wobei der dort vorgeschlagene Gurt quersteif ausgebildet ist und somit nicht als querbiegsamer Fördergurt bezeichnet werden kann. Querbiegsame Gurte sind an sich bekannt. Bei dem quersteifen Gurt nach US-A-3 637 091 besteht die Gefahr des Seitendrucks und des Abhebens von den Seilen, wenn Störeinflüsse, wie mangelnder Geradlauf, ungleiche Belastung u. s. w. wirken. Die Seile sind dadurch erheblichem Verschleiß unterworfen.

Ein weiterer derartiger Fördergurt ist nach GB-A-1 112 785 bekannt. Hier liegen unter jeder Seite des quersteifen Gurtes, der somit ebenfalls kein querbiegsamer Gurt ist, zwei Seile nebeneinander. Bei einer gewissen Durchfederung des Gurtquerschnitts durch die Beladung nehmen die Seile zueinander unterschiedliche Höhenlagen ein, was durch nachgebende Seil-Tragscheiben aufgenommen wird. Die oben beschriebene Gefahr des Seitendruckes und des Abhebens bei Störungen wird dadurch jedoch nicht beseitigt. Auch hier sind deswegen die Seile einem erheblichen Verschleiß unterworfen.

Der Erfindung liegt die Aufgabe zugrunde, eine derartige Förderanlage mit einem Fördergurt zu schaffen, bei der Tragelemente und Seile nur in sehr großen zeitlichen Intervallen ausgewechselt werden müssen und bei der das Auswechseln der Tragelemente und Seile mit geringem Zeitaufwand durchgeführt werden kann.

Die gestellte Aufgabe wird dadurch gelöst, daß ober- und unterhalb des Tragelementes jeweils ein Seil in dasselbe eingelassen ist und das jeweils obere Seil von oben her durch Führungsscheiben geführt ist.

Die zum Antrieb des Fördergurtes erforderliche Zugkraft wird bei der erfindungsgemäßen Förderanlage im wesentlichen durch den Fördergurt selbst bzw. durch darin eingebettete zugfeste Einlagen, wie Seile, Corde, Gewebe u. dgl. übertragen. Da die Seile nur eine geringe Zugkraft zu übertragen haben, benötigen sie nur einen vergleichsweise geringen Querschnitt, so daß ein größer gewählter Querschnitt überwiegend dem Verschleiß dienen kann, wobei der Werkstoff der Seile dementsprechend optimal ausgewählt werden kann und die Seile eine sehr hohe Standzeit erreichen, daher also nur in verhältnismäßig großen Zeitabständen ausgewechselt werden müssen.

Das Auswechseln der Seile und der Tragelemente wird dadurch erleichtert, daß sie mit dem Fördergurt nicht fest verbunden sind.

Die Ausgestaltung der Erfindung nach den Ansprüchen 2 bis 6 ermöglicht infolge der Möglichkeit der Wahl eines Werkstoffs mit niedrigstem Reibungskoeffizienten eine Zwangsführung des Fördergurtes bei sehr geringen Reibungsverlusten. Eine derartige Zwangsführung des Fördergurtes ist z. B. erforderlich bei der Anpassung an Höhenunterschiede und an Kurven.

In der Zeichnung sind mehrere Ausführungsbeispiele der Erfindung dargestellt. Es zeigen:

Fig. 1 einen Querschnitt durch das Ober- und Untertrum der Förderanlage;

Fig. 2 einen den rechten Randbereich eines Fördergurtes enthaltenen Ausschnitt A der Fig. 1;

Fig. 3 einen das Obertrum eines Fördergurtes enthaltenen Auschnitt aus der Förderanlage gemäß Fig. 1, in der Seitenansicht;

Fig. 4 eine schematische, perspektivische Darstellung eines Fördergurtes mit Seilen in unterteilten Abschnitten;

Fig. 5 einen den linken Randbereich des Fördergurtes enthaltenen Abschnitt einer Förderanlage im Querschnitt, wobei das Tragelement durch einen Haken gebildet ist;

Fig. 6 den Haken gemäß Fig. 5 in Vorderansicht.

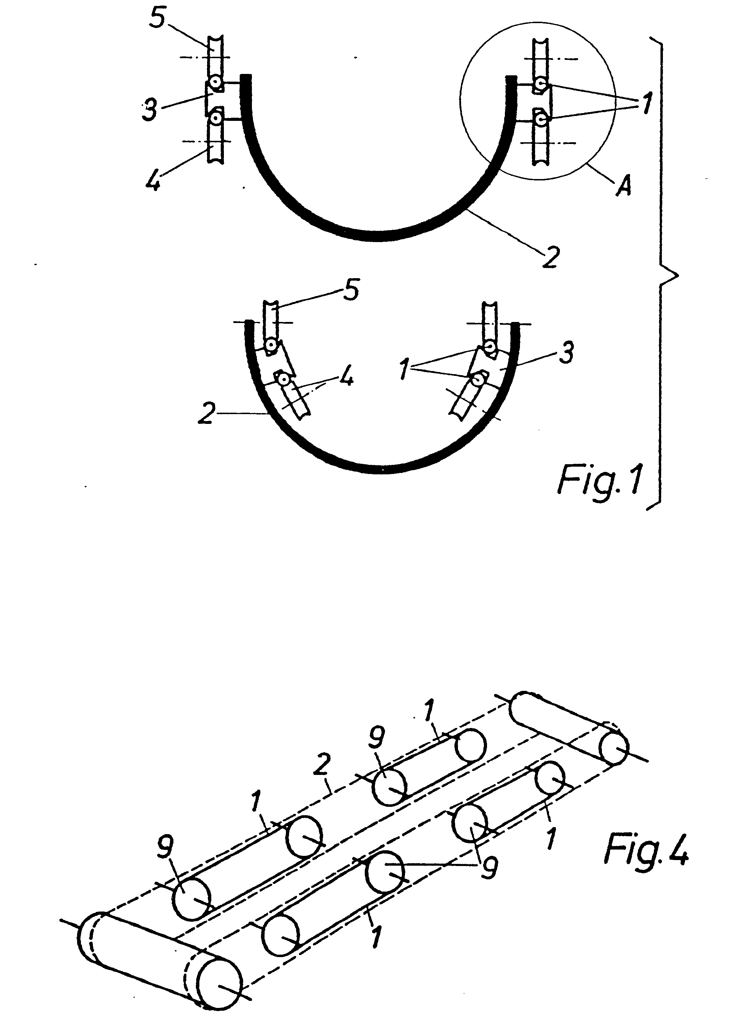

Aus Fig. 1 ist zu ersehen, daß durch die Einlassung der zwei Seile 1 in die Tragelemente 3 eine weitgehend beliebige Führung des Fördergurtes 2 mittels der Tragscheiben 4 und der Führungsscheiben 5 ermöglicht wird. Der Fördergurt 2 kann sowohl nach oben oder unten in Kurven als auch in horizontalen Kurven geführt werden.

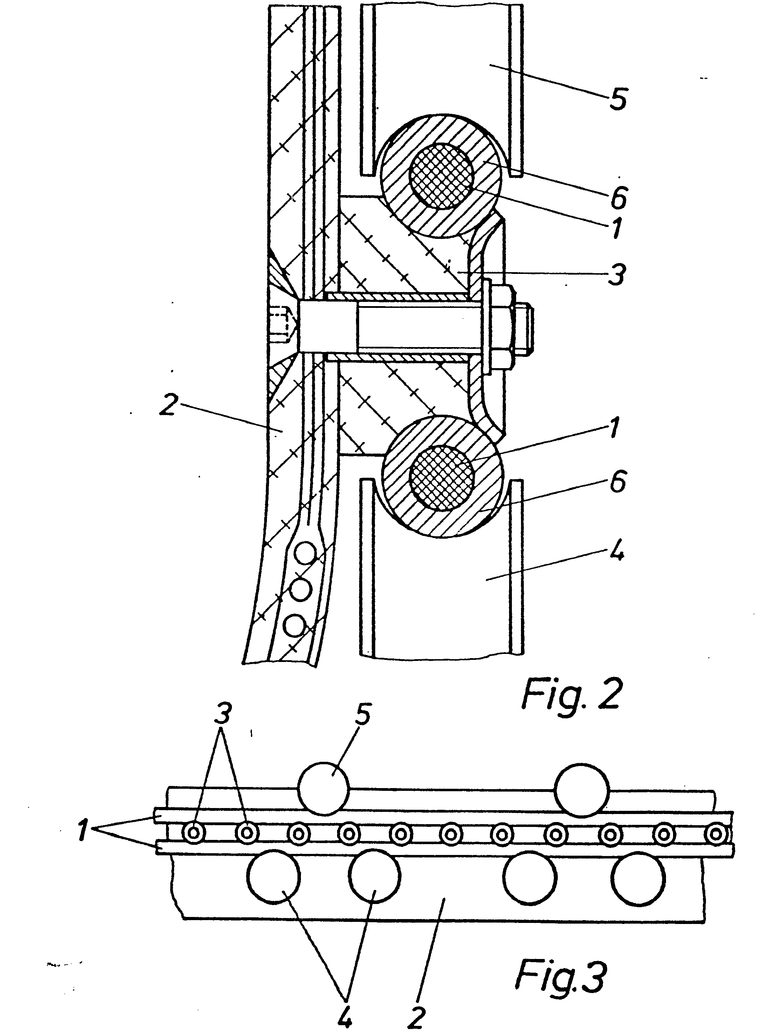

Wie aus den Fig. 2 und 3 zu ersehen ist, sind in das jeweilige Tragelement 3 zwei Seile 1 eingelassen. Das mit dem Fördergurt 2 verbundene Tragelement 3 ist mit diesem verschraubt. Das Tragelement 3 weist einen runden Querschnitt auf (vgl. Fig. 3). Die Verschraubungselemente für die Tragelemente 3 können so ausgebildet sein, daß diese drehbar sind. Zusätzlich zu den das untere Seil 1 tragenden Tragscheiben 4 sind Führungsscheiben 5 für das obere Seil 1 vorgesehen. Die Seile 1 sind mit einer Ummantelung 6 versehen.

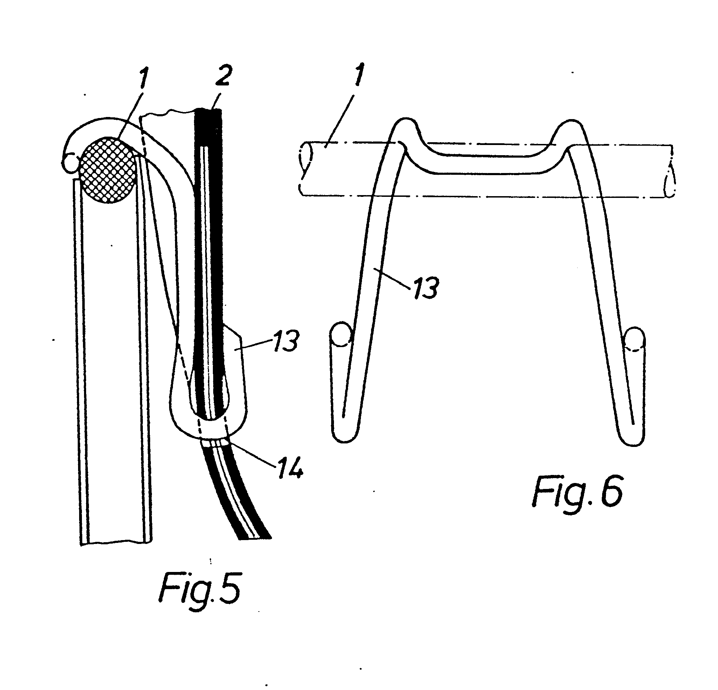

Bei dem in Fig. 4 dargestellten Ausführungsbeispiel sind zur besseren Sichtbarmachung des Verlaufs der Seile 1, die durch Vollinien angedeutet sind, die Ränder des Fördergurtes 2 durch gestrichelte Linien angedeutet. Die Tragscheiben für die Seile 1 sind weggelassen; dargestellt sind lediglich Umlenkscheiben 9. Das Seil 1 ist in jeweils zwei voneinander unabhängige endlose Abschnitte unterteilt, denen gesonderte Umlenkscheiben 9 zugeordnet sind.

Bei dem in den Fig. 5 und 6 dargestellten Ausführungsbeispiel wird der Fördergurt 2 mittels Haken 13 als Tragelement an den Seilen 1 aufgehängt. Hierzu weisen die Randbereiche des Fördergurtes 2 Bohrungen 14 auf, in die die Haken 13 eingehängt sind.

## Patentansprüche

1. Förderanlage mit einem endlosen Fördergurt (2) aus Gummi oder einem ähnlichen Werkstoff, der mittels am Fördergurt (2) in seinen Randbereichen befestigten Tragelementen (3, 13) an Seilen (1) aufgehängt ist, die ihrerseits über Tragscheiben (4) geführt sind, wobei das Seil (1) jeweils mit dem Fördergurt (2) bzw. mit den an dem Fördergurt (2) befestigten Tragelementen (3, 13) nicht fest verbunden ist, dadurch gekennzeichnet, daß ober- und unterhalb des Tragelementes (3, 13) jeweils ein Seil (1) in dasselbe eingelassen ist und das jeweils obere Seil (1) von oben her durch Führungsscheiben (5) geführt ist.

2. Förderanlage nach Anspruch 1, dadurch gekennzeichnet, daß jedes Seil (1) mit einer Ummantelung (6) versehen ist.

3. Förderanlage nach Anspruch 1 oder 2, dadurch gekennzeichnet, daß jedes Seil (1) in mehrere voneinander unabhängige, endlose Abschnitt unterteilt ist, wobei jedem Abschnitt gesonderte Umlenkscheiben (9) zugeordnet sind.

4. Förderanlage nach einem der Ansprüche 1 bis 3, dadurch gekennzeichnet, daß die Tragelemente (3) einen runden Querschnitt aufweisen.

5. Förderanlage nach Anspruch 4, dadurch gekennzeichnet, daß die Tragelemente (3) drehbar am Fördergurt (2) befestigt sind.

6. Förderanlage nach einem der Ansprüche 1 bis 3, dadurch gekennzeichnet, daß die Tragelemente (13) Haken sind, die in in den Randbereichen des Fördergurtes (2) befindliche Bohrungen (14) eingehängt sind.

## Claims

1. Conveying plant with an endless conveying belt (2) made of rubber or a similar material, being suspended with ropes (1) by means of carrying elements (3, 13) being mounted on the conveying belt (2) im its peripheral zone, these ropes being guided over supporting disks (4), the rope (1) is not being strongly connected to the carrying belt (2) or resp. to the carrying elements (3, 13) being mounted on to the conveying belt (2), characterized in that above and below the carrying element (3, 13) respectively one rope (1) is being embedded in the same and that the correspondant upper rope (1) is guided via guide disks.(5)

2. Conveying plant according to claim 1, characterized in that every rope (1) is provided with a jacket (6).

3. Conveying plant according to claim 1 or 2, characterized in that every rope (1) is divided into several endless sections being independent from each other, whereby separate deflecting pulleys (9) are assigned to each section.

4. Conveying plant according to one of the claims 1 to 3, characterized in that the carrying elements (3) have a circular cross section.

5. Conveying plant according to claim 4, characterized in that the carrying elements (3) are turnably fixed to the conveying belt (2).

6. Conveying plant according to one of the claims 1 to 3, chararcterized in that the carrying elements (13) are hooks, being hung into boxholes (14) which are situated in the peripheral zone of the conveying belt (2).

## Revendications

1. Convoyeur comportant une courroie transporteuse sans fin (2) en caoutchouc ou en matériau analogue, qui est suspendue à des câbles (1) par des supports (3, 13) fixés à la courroie transporteuse (2) dans ses zones latérales, ces cêbles étant guidés à leur tour par des poulies porteuses (4), le câble (1) n'étant pas fixé rigidement à la courroie transporteuse (2) ni aux supports (3, 13) fixés à la courroie transporteuse (2), caractérisé en ce qu'un câble (1) est inséré au-dessus et en dessous du support (3, 13) tandis que le câble supérieur (1) est guidé par le dessus par des poulies de guidage (5).

2. Convoyeur selon la revendication 1, caractérisé en ce que chaque câble (1) est pourvu d'un gainage (6).

3. Convoyeur selon la revendication 1 ou 2, caractérisé en ce que chaque câble (1) est subdivisé en plusieurs sections sans fin, indépendantes l'une de l'autre, chaque section correspondant à des poulies de renvoi séparées (9).

4. Convoyeur selon l'une des revendications 1 à 3, caractérisé en ce que les supports (3) ont une section circulaire.

5. Convoyeur selon la revendication 4, caractérisé en ce que les supports (3) sont fixés, avec possibilité de pivotement, sur la courroie transporteuse 2.

6. Convoyeur selon l'une des revendications 1 à 3, caractérisé en ce que les supports (13) sont des crochets qui sont accrochés dans des trous (14) situés dans les zones latérales de la courroie transporteuse (2).

Fig.1

Fig.4

0 127 617

**Fig. 2**

**Fig.3**

Fig.5

Fig.6